# EUROPEAN PATENT APPLICATION

(11) **EP 4 503 726 A1**
(43) Date of publication of application: **05.02.2025**
(21) Application number: 23778093.7
(22) Date of filing: 27.03.2023
(51) Int. Cl.: H04W 28/14

(54) **MODEL ACQUISITION METHOD, INFORMATION SENDING METHOD, INFORMATION RECEIVING METHOD, DEVICE AND NETWORK ELEMENT**

(30) Priority: 28.03.2022 CN 202210317181
(71) Applicant: Vivo Mobile Communication Co., Ltd., Dongguan, Guangdong 523863 (CN)
(72) Inventor: CHONG, Weiwei, Dongguan, Guangdong 523863 (CN)
(74) Representative: Conti, Marco
(86) International application number: PCT/CN2023/084048
(87) International publication number: WO 2023/185726

(57) **Abstract**

This application discloses a model acquisition method, an information sending method, an information receiving method, an apparatus, and a network element, and pertains to the field of communication technologies. The model acquisition method of an embodiment of this application includes: receiving, by a first network element, a model storage request message sent by a second network element, where the model storage request message includes model information for at least one model, the model information including at least one of a model file and model file storage information; and storing, by the first network element, the model information for the at least one model.

## Description

### CROSS-REFERENCE TO RELATED APPLICATIONS

This application claims priority to Chinese Patent Application No. 202210317181.5, filed in China on March 28, 2022, which is incorporated herein by reference in its entirety.

### TECHNICAL FIELD

This application pertains to the field of communication technologies, and specifically relates to a model acquisition method, an information sending method, an information receiving method, an apparatus, and a network element.

### BACKGROUND

Training function entities in a communication network can be used for model training and provide trained models to model consumers for use. Since training function entities are deployed in a distributed manner, resulting models are distributed across different training function entities. Before requesting to acquire a model, model consumers need to first use a dedicated network element device to perform training function and model discovery operations.

If multiple model consumers need to obtain a same type of model from a same training function entity, multiple queries to the network element device and multiple requests to the same training function entity for the model are required, resulting in significant signaling and data transmission overhead.

### SUMMARY

Embodiments of this application provide a model acquisition method, information sending method, information receiving method, apparatus, and network element, which can solve the problem of high signaling and data transmission overhead when multiple model consumers acquire models.

According to a first aspect, a model acquisition method is provided. The method includes:
receiving, by a first network element, a model storage request message sent by a second network element, where the model storage request message includes model information for at least one model, the model information including at least one of a model file and model file storage information; and
storing, by the first network element, the model information for the at least one model.

According to a second aspect, an information sending method is provided. The method includes:
sending, by a second network element, a model storage request message to a first network element, where the model storage request message includes model information for at least one model, the model information including at least one of a model file and model file storage information.

According to a third aspect, a model acquisition method is provided, including:
sending, by a third network element, a first model request message to a first network element, the first model request message including model requirement information; and
receiving, by the third network element, model information for a target model sent by the first network element, where the target model matches the model requirement information, and the model information includes at least one of a model file and model file storage information.

According to a fourth aspect, an information receiving method is provided, including:
receiving, by a fifth network element, a network element query request message sent by a first network element, where the network element query request message includes network element capability requirement information, the network element capability requirement information is determined by the first network element based on model requirement information, the network element capability requirement information is used to determine a fourth network element, and the fourth network element is capable of providing model information for a model matching the model requirement information; and
sending, by the fifth network element, a network element query response message to the first network element, the network element query response message including network element information matching the network element capability requirement information.

According to a fifth aspect, a model acquisition apparatus is provided, including:
a receiving module, configured to receive a model storage request message sent by a second network element, where the model storage request message includes model information for at least one model, the model information including at least one of a model file and model file storage information; and
a storage module, configured to store the model information for the at least one model.

According to a sixth aspect, an information sending apparatus is provided, including:
a sending module, configured to send a model storage request message to a first network element, where the model storage request message includes model information for at least one model, the model information including at least one of a model file and model file storage information.

According to a seventh aspect, a model acquisition apparatus is provided, including:
a sending module, configured to send a first model request message to a first network element, the first model request message including model requirement information; and
a receiving module, configured to receive model information for a target model sent by the first network element, where the target model matches the model requirement information, and the model information includes at least one of a model file and model file storage information.

According to an eighth aspect, an information receiving apparatus is provided, including:
a receiving module, configured to receive a network element query request message sent by a first network element, where the network element query request message includes network element capability requirement information, the network element capability requirement information is determined by the first network element based on model requirement information, the network element capability requirement information is used to determine a fourth network element, and the fourth network element is capable of providing model information for a model matching the model requirement information; and
a sending module, configured to send a network element query response message to the first network element, the network element query response message including network element information matching the network element capability requirement information.

According to a ninth aspect, a first network element is provided, including a processor and a communication interface. The communication interface is configured to receive a model storage request message sent by a second network element, where the model storage request message includes model information for at least one model, the model information including at least one of a model file and model file storage information. The processor is configured to store the model information for the at least one model.

According to a tenth aspect, a second network element is provided, including a processor and a communication interface. The communication interface is configured to send a model storage request message to a first network element, where the model storage request message includes model information for at least one model, the model information including at least one of a model file and model file storage information.

According to an eleventh aspect, a third network element is provided, including a processor and a communication interface. The communication interface is configured to send a first model request message to a first network element, the first model request message including model requirement information; and receive model information for a target model sent by the first network element, where the target model matches the model requirement information, and the model information includes at least one of a model file and model file storage information.

According to a twelfth aspect, a fifth network element is provided, including a processor and a communication interface. The communication interface is configured to receive a network element query request message sent by a first network element, where the network element query request message includes network element capability requirement information, the network element capability requirement information is determined by the first network element based on model requirement information, the network element capability requirement information is used to determine a fourth network element, and the fourth network element is capable of providing model information for a model matching the model requirement information; and send a network element query response message to the first network element, the network element query response message including network element information matching the network element capability requirement information.

According to a thirteenth aspect, a communication system is provided, including: a first network element, a second network element, a third network element, a fourth network element, and a fifth network element, where the first network element is configured to perform the method according to the first aspect, the second network element is configured to perform the method according to the second aspect, the third network element is configured to perform the method according to the third aspect, the fourth network element is configured to perform the method according to the second aspect; and the fifth network element is configured to perform the method according to the fourth aspect.

According to a fourteenth aspect, a readable storage medium is provided, where a program or instruction is stored in the readable storage medium. When the program or the instruction is executed by a processor, the method according to the first aspect, the second aspect, the third aspect, or the fourth aspect is implemented.

According to a fifteenth aspect, a chip is provided, where the chip includes a processor and a communication interface. The communication interface is coupled to the processor, and the processor is configured to run a program or instruction to implement the steps of the method according to the first aspect, the second aspect, the third aspect, or the fourth aspect.

According to a sixteenth aspect, a computer program/program product is provided, where the computer program/program product is stored in a storage medium, and the computer program/program product is executed by at least one processor to implement the steps of the method according to the first aspect, the second aspect, the third aspect, or the fourth aspect.

In the embodiments of this application, a first network element receives a model storage request message sent by a second network element, where the model storage request message includes model information for at least one model, the model information including at least one of a model file and model file storage information; and the first network element stores the model information for the at least one model. Through the foregoing manner, the first network element can store model information for at least one model locally, and model consumers only need to request the first network element to acquire the model, which can simplify the model acquisition process and reduce signaling and data transmission overhead.

### BRIEF DESCRIPTION OF DRAWINGS

FIG. 1 is a block diagram of a wireless communication system to which embodiments of this application are applicable;
FIG. 2 is a first flowchart of a model acquisition method according to an embodiment of this application;
FIG. 3 is a flowchart of an information sending method according to an embodiment of this application;
FIG. 4 is a second flowchart of a model acquisition method according to an embodiment of this application;
FIG. 5 is a flowchart of an information receiving method according to an embodiment of this application;
FIG. 6a is a first schematic diagram of information interaction between network elements according to an embodiment of this application;
FIG. 6b is a second schematic diagram of information interaction between network elements according to an embodiment of this application;
FIG. 7 is a first structural diagram of a model acquisition apparatus according to an embodiment of this application;
FIG. 8 is a structural diagram of an information sending apparatus according to an embodiment of this application;
FIG. 9 is a second structural diagram of a model acquisition apparatus according to an embodiment of this application;
FIG. 10 is a structural diagram of an information receiving apparatus according to an embodiment of this application;
FIG. 11 is a structural diagram of a communication device according to an embodiment of this application; and
FIG. 12 is a structural diagram of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to long term evolution (Long Term Evolution, LTE) or LTE-Advanced (LTE-Advanced, LTE-A) systems, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

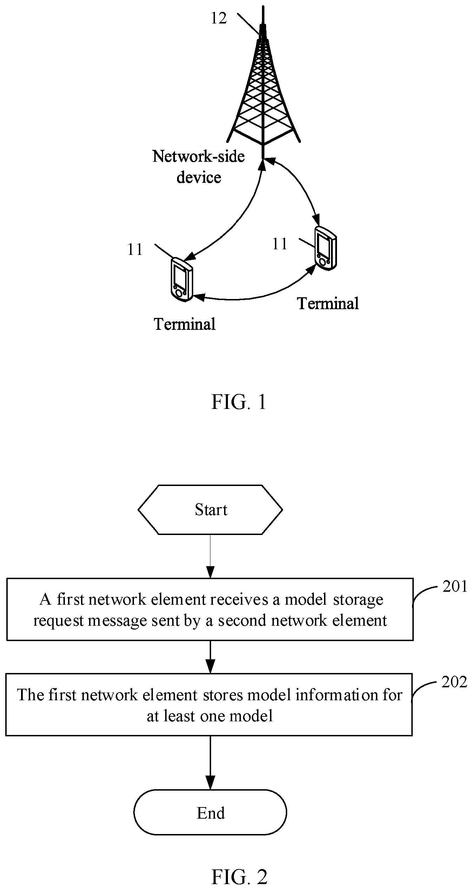

FIG. 1 is a block diagram of a wireless communication system to which embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), or pedestrian user equipment (Pedestrian User Equipment, PUE), a smart appliance (a household device with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in this embodiment of this application. The network-side device 12 can include an access network device or core network device, where the access network device can also be referred to as a radio access network device, radio access network (Radio Access Network, RAN), radio access network function, or radio access network unit. The access network device can include base stations, wireless local area network (Wireless Local Area Networks, WLAN) access points, Wi-Fi nodes, or the like. The base station can be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited.

The following describes in detail methods provided in embodiments of this application through some embodiments and application scenarios thereof with reference to the accompanying drawings.

As shown in FIG. 2, an embodiment of this application provides a model acquisition method including the following steps.

Step 201: A first network element receives a model storage request message sent by a second network element, where the model storage request message includes model information for at least one model, the model information including at least one of a model file and model file storage information; and
the model file (model file) is used to store information related to the model, such as a structure of the model and a parameter of the model. The model file storage information may be network element information (network element identifier, network element address, and the like) or model file download address information stored in the model file.

The first network element may include a data repository function network element, such as an analytics data repository function (Analytics Data Repository Function, ADRF) network element. The second network element may include a model training logical function (Model Training Logical Function, MTLF) network element or a network data analysis function (NWDAF) network element including model training logical function, the NWDAF containing an MTLF (containing MTLF).

The at least one model may be a model obtained by the second network element through training or a model obtained by another network element through training. In this case, another network element sends the model information for the at least one model to the second network element, and then the second network element sends the model information to the first network element for storage.

Step 202: The first network element stores the model information for the at least one model.

The first network element may store the model files locally, and when another network element requests a model, it can send a model file of the requested model to the another network element. The first network element may alternatively store model file storage information locally, and when another network element requests a model, it can send model file storage information for the requested model to the another network element. The another network element then acquires the model file based on the storage information.

In this embodiment, a first network element receives a model storage request message sent by a second network element, where the model storage request message includes model information for at least one model, the model information including at least one of a model file and model file storage information; and the first network element stores the model information for the at least one model. Through the foregoing manner, the first network element can store model information for at least one model locally, and model consumers only need to request the first network element to acquire the model, which can simplify the model acquisition process and reduce signaling and data transmission overhead.

In the above, the model information further includes model description information. The model description information includes at least one of the following:
(1) framework information (framework) on which a model is based, which is used to indicate an artificial intelligence (Artificial Intelligence, AI) training framework (training framework) on which the model training is based. For example, common model frameworks include TensorFlow, Pytorch, Caffe2, and the like;
(2) description method information on which a model is based. Model description method information includes model format information or model language information for indicating that the trained model is to be represented in a model format or model language. The model format information or model language information includes the open neural network exchange (Open Neural Network Exchange, ONNX) language. The description method information is used to indicate a platform framework or language required for interoperability of the model between different functional entities (such as between an analytics logical function (Analytics Logical Function, AnLF) and an MTLF, or between two MTLFs);
(3) optimization algorithm information on which a model is based. This information is used to indicate an algorithm used for model convergence during a training process of the model, such as gradient descent (Gradient Descent) method, stochastic gradient descent (Stochastic Gradient Descent, SGD) method, mini-batch gradient descent (mini-batch gradient descent) method, and momentum (Momentum) method;
(4) information about precision achievable by a model (also referred to as accuracy information). This information is used to indicate an accuracy level of output results that the trained model can achieve, specifically indicating the accuracy level of the model output results presented during the training or testing phase. For example, an MTLF can set up a validation dataset to evaluate the accuracy of the model. The validation dataset includes input data and corresponding label data of the model. The MTLF inputs the input data into the trained model to obtain output data, then compares the output data with the label data to check for consistency, and then calculates the accuracy of the model based on a corresponding algorithm (such as a percentage of consistent results);
(5) model storage space information, including storage space to be occupied by the model itself or total storage space to be occupied during operation of the model;
(6) model computing power requirement information, which is used to indicate computing power required to run the model for an inference task, such as "floating-point operations per second" or "peak speed per second" (that is, Floating-point Operations Per Second, FLOPS); and
(7) model version information, a version value corresponding to the model instance.

In addition, the model description information may also include at least one of the following:
(1) model function information; model function or type (model type) information. This information is used to indicate the function or role of the stored model, such as for image recognition, or service classification;
(2) model identification information, model ID. This information is used as an index to refer to the model;
(3) model input data type information;
(4) model output data type information; and
(5) vendor information, which is used to indicate a vendor of the MTLF or NWDAF (containing MTLF) that trained the model.

Optionally, the model storage request message further includes other information. The other information may include one or more of the following:
(1) analytics identification (Analytics ID). This information is used to indicate that an instance of the model corresponds to an inference task indicated by the analytics ID, or to indicate that the model can be used as a model corresponding to the analytics ID for inference;
(2) model target time information, a time period to which the model applies;
(3) model applicable object, such as to indicate that the model is trained for a specific UE, UE group, or all UEs; or to indicate that the model is applicable to a specific UE, UE group, or all UEs; and
(4) model filter (Model filter) information: including single network slice selection assistance information (Single Network Slice Selection Assistance Information, S-NSSAI), data network name (Data Network Name, DNN), area of interest (area of interest), and the like.

The first network element stores other information. Further, the first network element may also store a network element identifier, network element address, and other information for the second network element.

In an embodiment of this application, the method further includes:
receiving, by the first network element, a first model request message sent by a third network element, where the first model request message includes model requirement information;
determining, by the first network element, a target model based on the model requirement information, the target model matching the model requirement information; and
sending, by the first network element, model information for the target model to the third network element.

Specifically, the third network element may be a model consuming network element, such as an analytics logical function (Analytics Logical Function, AnLF) network element or NWDAF (containing AnLF). The third network element sends a first model request message to the first network element to request a model matching the model requirement information.

The model requirement information includes at least one of the following:
(1) framework information on which a model is based. A model consuming network element uses this information to indicate that a requested model must be based on a specific platform framework; that is, the model consuming network element indicates that the requested model must be based on a specific AI training framework in order for the network element to understand or run the model;
(2) description method information on which a model is based. A model consuming network element uses this information to indicate that a requested model must be based on a specific language or format; that is, the model consuming network element indicates that the requested model must be based on a specific model description method or format, such as ONNX, for the network element to understand or run the model;
(3) optimization algorithm information on which a model is based. A model consuming network element uses this information to specify that a requested model must be based on a specific optimization algorithm;
(4) information about precision achievable by a model. A model consuming network element uses this information to specify an accuracy requirement for output results that a requested model must be able to achieve;
(5) model storage space information. A model consuming network element uses this information to specify the requirement for storage space to be occupied by a requested model itself or the requirement for total storage space to be occupied during operation of the model. For example, the model itself is less than 5 M or a total storage space during operation of the model is less than 10 M;
(6) model computing power requirement information. A model consuming network element uses this information to indicate a request for a model meeting the computing power requirement. For example, the computing power requirement for running the model does not exceed 500 floating-point operations per second (Floating-point Operations Per Second, FLOPS); and
(7) model version requirement information, version requirements corresponding to the model instance.

The model requirement information also includes one or more of the following:
(1) model function or type (model type) information. Model consumers use this information to indicate a function or role of a requested model, such as for image recognition and service classification;
(2) model identification (model ID) information. Model consumers use the model ID to refer to a request for a specific model instance; and
(3) vendor requirement information, which is used to indicate the requirement for a vendor that an MTLF or NWDAF (containing MTLF) producing the model is of.

Optionally, the first model request message further includes other requirement information. The other requirement information includes at least one of the following:
(1) analytics ID. This information is used to indicate that a model consumer is requesting a model corresponding to an inference task indicated by the analytics ID, or to indicate that the requested model can be used as the model corresponding to the analytics ID for inference;
(2) model target time information, a time period to which the model applies;
(3) model applicable object, such as to indicate that the model is trained for a specific UE, UE group, or all UEs; or to indicate that the model needs to be applicable to a specific UE, UE group, or all UEs; and
(4) model filter information: including S-NSSAI, DNN, area of interest, and the like.

The first network element determines a target model based on the model requirement information and the stored model description information. The target model may include one or more models, and the model description information for these one or more models (model) can satisfy or match the model requirement information.

For example, based on the model function or type (model type) information in the model requirement information, one or more models are determined, and the model function or type (model type) information in the model description information for these one or more models corresponds to it.

For another example, based on framework requirement or description method requirement information on which a model is based in the model requirement information, one or more models are determined, and the framework or description method information on which a model is based in the model description information for these one or more models can satisfy the framework requirement or description method requirement information on which the model is based.

For another example, based on the precision/accuracy requirement information in the model requirement information, one or more models are determined, and the precision/accuracy information in the model description information for these one or more models can satisfy the precision/accuracy requirement information. Other cases can be derived by analogy.

The model description information for the target model matches the model requirement information one by one. For example, framework information on which the target model is based is the same as framework information on which a model is based in the model requirement information, and/or information about precision achievable by a model in the model description information is the same as precision requirement information in the model requirement information, and/or model storage space information in the model description information is the same as storage space requirement information in the model requirement information, and so on.

After determining the target model, the first network element sends a model feedback message to the third network element, the model feedback message carrying the model information for the target model.

Optionally, the model feedback message includes all or part of the model description information corresponding to the one or more models.

Optionally, the model feedback message further includes all or part of the other information corresponding to the one or more models.

The first network element matches the model requirement information with the locally stored model description information. If the match is successful, that is in a case that the first network element includes a model matching the model requirement information, the first network element determines the model matching the model requirement information as the target model. If the match is not successful, the first network element sends a response message to the second network element, the response message being used to indicate that the model request has failed. Optionally, the response message may carry a cause value that the model request failed because the model does not exist.

In another case, if the match is not successful, that is, in a case that the first network element does not include a model matching the model requirement information, it is first to obtain a model matching the model requirement information, with the specifics as follows:
the first network element sends a second model request message to a fourth network element, the second model request message including the model requirement information; the first network element receives a model response message sent by the fourth network element, the model response message including model information for a model matching the model requirement information; and the first network element determines the model matching the model requirement information as the target model.

The fourth network element may be an MTLF or NWDAF (containing MTLF) network element. There may be multiple fourth network elements, and the second network element and the fourth network element may be different network elements.

The first network element determines network element capability requirement information based on the first model requirement information, and then matches the network element capability requirement information with pre-acquired network element capability information to determine a fourth network element, or the first network element determines a fourth network element by querying a fifth network element, with the specific process as follows:
the first network element sends a network element query request message to a fifth network element, where the network element query request message includes network element capability requirement information, the network element capability requirement information being determined by the first network element based on the first model requirement information;
the first network element receives a network element query response message sent by the fifth network element, the network element query response message including network element information matching the network element capability requirement information; and
the first network element determines the fourth network element based on the network element information, the fourth network element being capable of providing model information for a model matching the model requirement information.

In the above, the fifth network element includes a network repository function (Network Repository Function, NRF) network element.

The network element capability requirement information includes at least one of the following:
(1) model function or type (model type) information;
(2) model identification information, model ID;
(3) framework requirement or description method information on which a model is based;
(4) optimization algorithm information on which a model is based;
(5) precision/accuracy information;
(6) storage space information;
(7) model computing power information;
(8) vendor requirement information; and
(9) version requirement information.

In the model acquisition method of the foregoing embodiment, the second network element can publish and store the trained model to the first network element through the first network element, and publish the description information corresponding to the model to the first network element. Model consuming network elements uniformly query and acquire the model matching the requirement from the first network element. This avoids different model consuming network elements from separately acquiring models from different training function entities, which avoids a large number of point-to-point network element discovery operations and eliminates the repeated process of requesting to send a model in a point-to-point approach, reducing network signaling and data overhead.

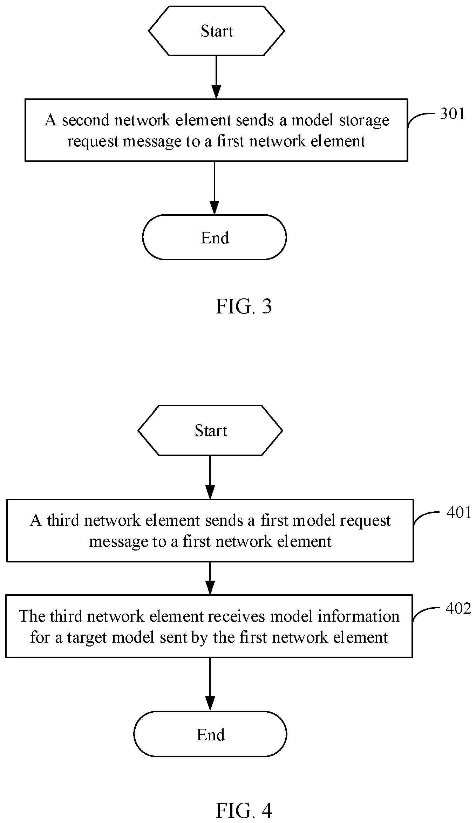

As shown in FIG. 3, an embodiment of this application also provides an information sending method, including the following steps.

Step 301: A second network element sends a model storage request message to a first network element, where the model storage request message includes model information for at least one model, the model information including at least one of a model file and model file storage information.

The model file (model file) is used to store information related to the model, such as a structure of the model and a parameter of the model. The model file storage information may be network element information (network element identifier, network element address, and the like) or model file download address information stored in the model file.

The first network element may include a data repository function network element, such as an ADRF network element. The second network element may include an MTLF network element or NWDAF (containing MTLF) network element.

The at least one model may be a model obtained by the second network element through training or a model obtained by another network element through training. In this case, another network element sends the model information for the at least one model to the second network element, and then the second network element sends the model information to the first network element for storage.

In this embodiment, a second network element sends a model storage request message to a first network element, where the model storage request message includes model information for at least one model, the model information including at least one of a model file and model file storage information. Through the foregoing manner, the second network element sends the acquired model information for the at least one model to the first network element for storage, and model consumers simply request the first network element to acquire the model, which can simplify the model acquisition process and reduce signaling and data transmission overhead.

In the above, the model information further includes model description information. The model description information includes at least one of the following:
(1) framework information (framework) on which a model is based, which is used to indicate an AI training framework on which the model training is based. For example, common model frameworks include TensorFlow, Pytorch, Caffe2, and the like;
(2) description method information on which a model is based. Model description method information includes model format information or model language information for indicating that the trained model is to be represented in a model format or model language. The model format information or model language information includes ONNX language. The description method information is used to indicate a platform framework or language required for interoperability of the model between different functional entities (such as between an AnLF and an MTLF, or between two MTLFs);
(3) optimization algorithm information on which a model is based. This optimization algorithm information is used to indicate an algorithm used for model convergence during a training process of the model, such as gradient descent (Gradient Descent) method, stochastic gradient descent (Stochastic Gradient Descent, SGD) method, mini-batch gradient descent (mini-batch gradient descent) method, and momentum (Momentum) method;
(4) information about precision achievable by a model (also referred to as accuracy information). This precision information is used to indicate an accuracy level of output results that the trained model can achieve, specifically indicating the accuracy level of the model output results presented during the training or testing phase. For example, an MTLF can set up a validation dataset to evaluate the accuracy of the model. The validation dataset includes input data and corresponding label data of the model. The MTLF inputs the input data into the trained model to obtain output data, then compares the output data with the label data to check for consistency, and then calculates the accuracy of the model based on a corresponding algorithm (such as a percentage of consistent results);
(5) model storage space information, including storage space to be occupied by the model itself or total storage space to be occupied during operation of the model;
(6) model computing power requirement information, which is used to indicate computing power required to run the model for an inference task, such as FLOPS (that is, "floating-point operations per second" or "peak speed per second"); and
(7) model version information, a version value corresponding to the model instance.

In addition, the model description information may also include at least one of the following:
(1) model function information; model function or type (model type) information. This information is used to indicate the function or role of the stored model, such as for image recognition, or service classification;
(2) model identification information, model ID. This information is used as an index to refer to the model;
(3) model input data type information;
(4) model output data type information; and
(5) vendor information, which is used to indicate a vendor of the MTLF or NWDAF (containing MTLF) that trained the model.

Optionally, the model storage request message further includes other information. The other information may include one or more of the following:
(1) analytics identification (Analytics ID). This information is used to indicate that an instance of the model corresponds to an inference task indicated by the analytics ID, or to indicate that the model can be used as a model corresponding to the analytics ID for inference;
(2) model target time information, a time period to which the model applies;
(3) model applicable object, such as to indicate that the model is trained for a specific UE, UE group, or all UEs; or to indicate that the model is applicable to a specific UE, UE group, or all UEs; and
(4) model filter (Model filter) information: including S-NSSAI, DNN, area of interest, and the like.

In an embodiment of this application, before the sending, by a second network element, a model storage request message to a first network element, the method further includes:
training, by the second network element, the at least one model to obtain model information for the at least one model, where in this case, the second network element obtains the at least one model through training;
   or,
receiving, by the second network element, the model information for the at least one model, where in this case, the second network element acquires the model information for the at least one model from another network element.

In an embodiment of this application, before the sending, by a second network element, a model storage request message to a first network element, the method further includes:
receiving, by the second network element, a second model request message sent by the first network element, where the second model request message includes model requirement information, and the at least one model is a model matching the model requirement information.

Specifically, the second network element receives a second model request message, determines at least one model based on the model requirement information, and sends the at least one model carried in the model storage request message to the first network element.

The model requirement information includes at least one of the following:
(1) framework information on which a model is based. A model consuming network element uses this information to indicate that a requested model must be based on a specific platform framework; that is, the model consuming network element indicates that the requested model must be based on a specific AI training framework in order for the network element to understand or run the model;
(2) description method information on which a model is based. A model consuming network element uses this information to indicate that a requested model must be based on a specific language or format; that is, the model consuming network element indicates that the requested model must be based on a specific model description method or format, such as ONNX, for the network element to understand or run the model;
(3) optimization algorithm information on which a model is based. A model consuming network element uses this information to specify that a requested model must be based on a specific optimization algorithm;
(4) information about precision achievable by a model. A model consuming network element uses this information to specify an accuracy requirement for output results that a requested model must be able to achieve;
(5) model storage space information. A model consuming network element uses this information to specify the requirement for storage space to be occupied by a requested model itself or the requirement for total storage space to be occupied during operation of the model. For example, the model itself is less than 5 M or a total storage space during operation of the model is less than 10 M;
(6) model computing power requirement information. A model consuming network element uses this information to indicate a request for a model meeting the computing power requirement. For example, the computing power requirement for running the model does not exceed 500 FLOPSs; and
(7) model version requirement information, version requirements corresponding to the model instance.

The model requirement information also includes one or more of the following:
(1) model function or type (model type) information. Model consumers use this information to indicate a function or role of a requested model, such as for image recognition and service classification;
(2) model identification (model ID) information. Model consumers use the model ID to refer to a request for a specific model instance; and
(3) vendor requirement information, which is used to indicate the requirement for a vendor that an MTLF or NWDAF (containing MTLF) producing the model is of.

Optionally, the first model request message further includes other requirement information. The other requirement information includes at least one of the following:
(1) analytics ID. This information is used to indicate that a model consumer is requesting a model corresponding to an inference task indicated by the analytics ID, or to indicate that the requested model can be used as the model corresponding to the analytics ID for inference;
(2) model target time information, a time period to which the model applies;
(3) model applicable object, such as to indicate that the model is trained for a specific UE, UE group, or all UEs; or to indicate that the model is applicable to a specific UE, UE group, or all UEs; and
(4) model filter information: including S-NSSAI, DNN, area of interest, and the like.

The first network element determines a target model based on the model requirement information and the stored model description information. The target model may include one or more models, and the model description information for these one or more models (model) can satisfy or match the model requirement information.

For example, based on the model function or type (model type) information in the model requirement information, one or more models are determined, and the model function or type (model type) information in the model description information for these one or more models corresponds to it.

For another example, based on framework requirement or description method requirement information on which a model is based in the model requirement information, one or more models are determined, and the framework or description method information on which a model is based in the model description information for these one or more models can satisfy the framework requirement or description method requirement information on which the model is based.

For another example, based on the precision/accuracy requirement information in the model requirement information, one or more models are determined, and the precision/accuracy information in the model description information for these one or more models can satisfy the precision/accuracy requirement information. Other cases can be derived by analogy.

The at least one model is a model matching the model requirement information, which can be understood to mean that the model description information for a model in the at least one model matches the model requirement information one by one. For example, the framework information on which a model in the at least one model is based matches the framework information on which a model is based in the model requirement information, and/or the information about precision achievable by a model in the model description information matches the precision requirement information in the model requirement information, and/or the model storage space information in the model description information matches the storage space requirement information in the model requirement information, and so on.

As shown in FIG. 4, an embodiment of this application also provides a model acquisition method, including the following steps.

Step 401: A third network element sends a first model request message to a first network element, the first model request message including model requirement information.

The first model request message is used to request model information for a model matching the model requirement information. The first network element may include a data repository function network element, such as an ADRF network element. The third network element may be a model consuming network element, such as an AnLF network element or NWDAF (containing AnLF).

Step 402: The third network element receives model information for a target model sent by the first network element, where the target model matches the model requirement information, and the model information includes at least one of a model file and model file storage information.

The model file (model file) is used to store information related to the model, such as a structure of the model and a parameter of the model. The model file storage information may be network element information (network element identifier, network element address, and the like) or model file download address information stored in the model file.

In this embodiment, a third network element sends a first model request message to a first network element, the first model request message including model requirement information; and the third network element receives model information for a target model sent by the first network element, where the target model matches the model requirement information, and the model information includes at least one of a model file and model file storage information. Through the foregoing manner, the third network element may request the first network element for a model matching the model requirement information, which can simplify the model acquisition process and reduce signaling and data transmission overhead.

In the above, the model information further includes model description information. The model description information includes at least one of the following:
(1) framework information (framework) on which a model is based, which is used to indicate an AI training framework on which the model training is based. For example, common model frameworks include TensorFlow, Pytorch, Caffe2, and the like;
(2) description method information on which a model is based. Model description method information includes model format information or model language information for indicating that the trained model is to be represented in a model format or model language. The model format information or model language information includes ONNX language. The description method information is used to indicate a platform framework or language required for interoperability of the model between different functional entities (such as between an AnLF and an MTLF, or between two MTLFs);
(3) optimization algorithm information on which a model is based. This information is used to indicate an algorithm used for model convergence during a training process of the model, such as gradient descent (Gradient Descent) method, stochastic gradient descent (Stochastic Gradient Descent, SGD) method, mini-batch gradient descent (mini-batch gradient descent) method, and momentum (Momentum) method;
(4) information about precision achievable by a model (also referred to as accuracy information). This information is used to indicate an accuracy level of output results that the trained model can achieve, specifically indicating the accuracy level of the model output results presented during the training or testing phase. For example, an MTLF can set up a validation dataset to evaluate the accuracy of the model. The validation dataset includes input data and corresponding label data of the model. The MTLF inputs the input data into the trained model to obtain output data, then compares the output data with the label data to check for consistency, and then calculates the accuracy of the model based on a corresponding algorithm (such as a percentage of consistent results);
(5) model storage space information, including storage space to be occupied by the model itself or total storage space to be occupied during operation of the model;
(6) model computing power requirement information, which is used to indicate computing power required to run the model for an inference task, such as FLOPS (that is, "floating-point operations per second" or "peak speed per second"); and
(7) model version information, a version value corresponding to the model instance.

In addition, the model description information may also include at least one of the following:
(1) model function information; model function or type (model type) information. This information is used to indicate the function or role of the stored model, such as for image recognition, or service classification;
(2) model identification information, model ID. This information is used as an index to refer to the model;
(3) model input data type information;
(4) model output data type information; and
(5) vendor information, which is used to indicate a vendor of the MTLF or NWDAF (containing MTLF) that trained the model.

Optionally, the model storage request message further includes other information. The other information may include one or more of the following:
(1) analytics identification (Analytics ID). This information is used to indicate that an instance of the model corresponds to an inference task indicated by the analytics ID, or to indicate that the model can be used as a model corresponding to the analytics ID for inference;
(2) model target time information, a time period to which the model applies;
(3) model applicable object, such as to indicate that the model is trained for a specific UE, UE group (group), or all UEs; or to indicate that the model is applicable to a specific UE, UE group, or all UEs; and
(4) model filter (Model filter) information: including S-NSSAI, DNN, area of interest, and the like.

The model requirement information includes at least one of the following:
(1) framework information on which a model is based. A model consuming network element uses this information to indicate that a requested model must be based on a specific platform framework; that is, the model consuming network element indicates that the requested model must be based on a specific AI training framework in order for the network element to understand or run the model;
(2) description method information on which a model is based. A model consuming network element uses this information to indicate that a requested model must be based on a specific language or format; that is, the model consuming network element indicates that the requested model must be based on a specific model description method or format, such as ONNX, for the network element to understand or run the model;
(3) optimization algorithm information on which a model is based. A model consuming network element uses this information to specify that a requested model must be based on a specific optimization algorithm;
(4) information about precision achievable by a model. A model consuming network element uses this information to specify an accuracy requirement for output results that a requested model must be able to achieve;
(5) model storage space information. A model consuming network element uses this information to specify the requirement for storage space to be occupied by a requested model itself or the requirement for total storage space to be occupied during operation of the model. For example, the model itself is less than 5 M or a total storage space during operation of the model is less than 10 M;
(6) model computing power requirement information. A model consuming network element uses this information to indicate a request for a model meeting the computing power requirement. For example, the computing power requirement for running the model does not exceed 500 FLOPSs; and
(7) model version requirement information, version requirements corresponding to the model instance.

The model requirement information also includes one or more of the following:
(1) model function or type (model type) information. Model consumers use this information to indicate a function or role of a requested model, such as for image recognition and service classification;
(2) model identification (model ID) information. Model consumers use the model ID to refer to a request for a specific model instance; and
(3) vendor requirement information, which is used to indicate the requirement for a vendor that an MTLF or NWDAF (containing MTLF) producing the model is of.

Optionally, the first model request message further includes other requirement information. The other requirement information includes at least one of the following:
(1) analytics ID. This information is used to indicate that a model consumer is requesting a model corresponding to an inference task indicated by the analytics ID, or to indicate that the requested model can be used as the model corresponding to the analytics ID for inference;
(2) model target time information, a time period to which the model applies;
(3) model applicable object, such as to indicate that the model is trained for a specific UE, UE group, or all UEs; or to indicate that the model is applicable to a specific UE, UE group, or all UEs; and
(4) model filter information: including S-NSSAI, DNN, area of interest, and the like.

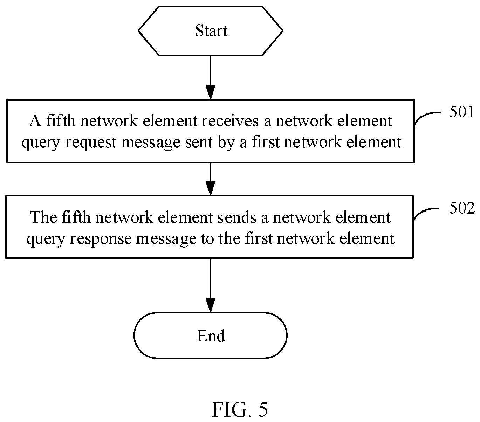

As shown in FIG. 5, an embodiment of this application also provides an information receiving method, including the following steps.

Step 501: A fifth network element receives a network element query request message sent by a first network element, where the network element query request message includes network element capability requirement information, the network element capability requirement information is determined by the first network element based on model requirement information, the network element capability requirement information is used to determine a fourth network element, and the fourth network element is capable of providing model information for a model matching the model requirement information.

The fifth network element can determine the fourth network element based on the network element capability requirement information. The fourth network element is used to provide model information for a model matching the model requirement information. For example, the fourth network element can obtain a model matching the model requirement information through training.

The first network element may include a data repository function network element, such as an ADRF network element. The fifth network element may include an NRF network element.

Step 502: The fifth network element sends a network element query response message to the first network element, the network element query response message including network element information matching the network element capability requirement information, that is, network element information for the fourth network element.

In this embodiment, a fifth network element receives a network element query request message sent by a first network element, where the network element query request message includes network element capability requirement information, the network element capability requirement information is determined by the first network element based on model requirement information, the network element capability requirement information is used to determine a fourth network element, and the fourth network element is capable of providing model information for a model matching the model requirement information; and the fifth network element sends a network element query response message to the first network element, the network element query response message including network element information matching the network element capability requirement information. Through the foregoing manner, the fifth network element can determine the fourth network element based on the network element capability requirement information sent by the first network element, and send network element information for the fourth network element to the first network element, facilitating the first network element to acquire the model information for a model matching the model requirement information from the fourth network element, so that when a model consumer requests the first network element for a model, the model acquisition process can be simplified, and signaling and data transmission overhead can be reduced.

The model requirement information includes at least one of the following:
(1) framework information on which a model is based. A model consuming network element uses this information to indicate that a requested model must be based on a specific platform framework; that is, the model consuming network element indicates that the requested model must be based on a specific AI training framework in order for the network element to understand or run the model;
(2) description method information on which a model is based. A model consuming network element uses this information to indicate that a requested model must be based on a specific language or format; that is, the model consuming network element indicates that the requested model must be based on a specific model description method or format, such as ONNX, for the network element to understand or run the model;
(3) optimization algorithm information on which a model is based. A model consuming network element uses this information to specify that a requested model must be based on a specific optimization algorithm;
(4) information about precision achievable by a model. A model consuming network element uses this information to specify an accuracy requirement for output results that a requested model must be able to achieve;
(5) model storage space information. A model consuming network element uses this information to specify the requirement for storage space to be occupied by a requested model itself or the requirement for total storage space to be occupied during operation of the model. For example, the model itself is less than 5 M or a total storage space during operation of the model is less than 10 M;
(6) model computing power requirement information. A model consuming network element uses this information to indicate a request for a model meeting the computing power requirement. For example, the computing power requirement for running the model does not exceed 500 FLOPSs; and
(7) model version requirement information, version requirements corresponding to the model instance.

The model requirement information also includes one or more of the following:
(1) model function or type (model type) information. Model consumers use this information to indicate a function or role of a requested model, such as for image recognition and service classification;
(2) model identification (model ID) information. Model consumers use the model ID to refer to a request for a specific model instance; and
(3) vendor requirement information, which is used to indicate the requirement for a vendor that an MTLF or NWDAF (containing MTLF) producing the model is of.

Optionally, the first model request message further includes other requirement information. The other requirement information includes at least one of the following:
(1) analytics ID. This information is used to indicate that a model consumer is requesting a model corresponding to an inference task indicated by the analytics ID, or to indicate that the requested model can be used as the model corresponding to the analytics ID for inference;
(2) model target time information, a time period to which the model applies;
(3) model applicable object, such as to indicate that the model is trained for a specific UE, UE group, or all UEs; or to indicate that the model is applicable to a specific UE, UE group, or all UEs; and
(4) model filter information: including S-NSSAI, DNN, area of interest, and the like.

The methods provided in this application are described below with examples.

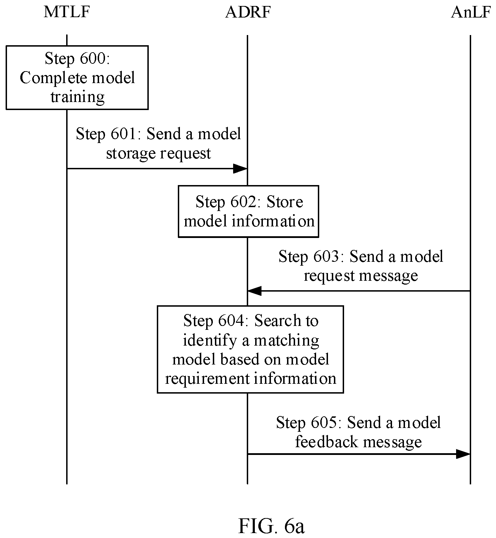

FIG. 6a is a schematic diagram of information interaction between network elements according to an embodiment of this application. As shown in FIG. 6a, the following steps are included.

Step 600: An MTLF trains a model for a specific AI service (such as image recognition, or user classification), which involves data collection and model training operations based on the collected data. The data collection or model training process is not limited in this application.

Step 601: After the model training is completed, a model training function (such as MTLF) sends a model storage request message to a model platform (such as ADRF) to publish or store a specific AI model to the model platform.

Specifically, the model storage request message includes a model file (model file) or model file storage information (for example, download address information), and model description information. The model file (model file) or model file download address information is used to store the trained model file itself on the model platform or to store a model file download address on the model platform.

Contents included in the model storage request message and model description information can be found in the foregoing description and will not be repeated here.

Step 602: The model platform (such as ADRF) stores the relevant model information upon receiving the model request message.

Specifically, the model information stored by the model platform (such as ADRF) is the model file (model file) or model file storage information and model description information sent by the MTLF in step 601.

Optionally, the model platform (such as ADRF) further stores other information included in the model storage request message.

Optionally, the model platform (such as ADRF) further stores information such as a network element identifier and a network element address of the MTLF.

Step 603: A model consuming network element (such as AnLF or another MTLF) sends a model request message to an ADRF to request a specific model. The model request message includes model requirement information, and contents included in the model requirement information can be found in the foregoing description and will not be repeated here.

Optionally, the model request message further includes other requirement information. Contents included in the other requirement information can be found in the foregoing description and will not be repeated here.

Step 604: The model platform (such as ADRF) determines one or more models based on the model requirement information and the stored model description information. The model description information for these one or more models can satisfy or match the model requirement information.

For example, based on the model function or type (model type) information in the model requirement information, one or more models are determined, and the model function or type (model type) information in the model description information for these one or more models corresponds to it.

For another example, based on framework requirement or description method requirement information on which a model is based in the model requirement information, one or more models are determined, and the framework or description method information on which a model is based in the model description information for these one or more models can satisfy the framework requirement or description method requirement information on which the model is based.

For another example, based on the precision/accuracy requirement information in the model requirement information, one or more models are determined, and the precision/accuracy information in the model description information for these one or more models can satisfy the precision/accuracy requirement information.

Other cases can be derived by analogy.

In addition, the model platform (such as ADRF) can also make a comprehensive judgment based on multiple pieces of requirement information in the model requirement information.

Step 605: The model platform (such as ADRF) sends a model feedback message to the model consuming network element, where the model feedback message includes model file (model file) or model file storage information corresponding to the one or more determined models.

Optionally, the model feedback message includes all or part of the model description information corresponding to the one or more models.

Optionally, the model feedback message further includes all or part of the other information corresponding to the one or more models.

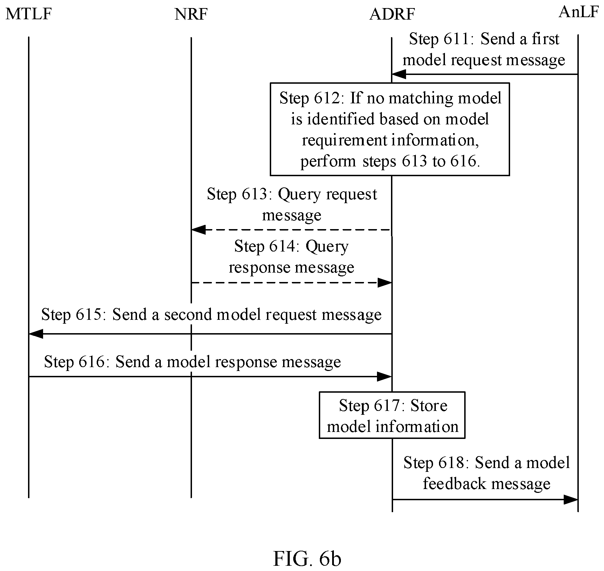

FIG. 6b is a schematic diagram of information interaction between network elements according to an embodiment of this application. As shown in FIG. 6b, the following steps are included.

Step 611: A model consuming network element (such as AnLF or another MTLF) sends a first model request message to an ADRF to request a specific model. This step can be referred to step 603.

Step 612: A model platform (such as ADRF) determines that no suitable model is matched based on the first model request message, and then performs the following steps 613-616.

The specific matching method can be referred to step 604.

Step 613: The model platform (such as ADRF) determines an MTLF for a model to be acquired. Optionally, the model platform (such as ADRF) sends a query request message to a query network element (such as NRF) to acquire an MTLF that can provide a corresponding model.

Specifically, the query request message includes NF type information (such as MTLF type, NWDAF type, and training UE type) and MTLF capability requirement information, where the MTLF capability requirement capability information is determined based on the model requirement information in step 611.

The MTLF capability requirement information is used by the NRF to determine one or more MTLFs. The one or more MTLFs can meet or support the MTLF capability requirements.

The MTLF capability requirement information is the network element capability requirement information, and contents included in the element capability requirement information can be found in the foregoing description and will not be repeated here.

In addition, the query request message further includes one or more of the following:
analytics ID. This information is used to indicate that a model consumer is requesting a model corresponding to an inference task indicated by the analytics ID, or to indicate that the requested model can be used as the model corresponding to the analytics ID for inference;
model target time information, a time period to which the model applies;
model applicable object, such as to indicate that the model is trained for a specific UE, UE group, or all UEs; or to indicate that the model is applicable to a specific UE, UE group, or all UEs; and
model filter information: including S-NSSAI, DNN, area of interest, and the like.

Step 614: Optionally, the query network element sends a query response message to the model platform (such as ADRF), which includes the determined MTLF information.

Specifically, the query network element determines one or more MTLFs meeting the requirement based on one or more items in the MTLF capability requirement information.

In the above, steps 613 and 614 are optional steps. In a scenario in which MTLF capability information is present in the model platform (such as ADRF), the model platform (such as ADRF) can also determine one or more MTLFs meeting the requirement by itself. This method requires the MTLFs to pre-register their capability information with the model platform (such as ADRF), where the registered capability information includes information for one or more capabilities corresponding to the foregoing MTLF capability requirement information.

Step 615: The model platform (such as ADRF) sends a second model request message to the one or more determined MTLFs to request the MTLFs for a model requested by the model consuming network element.

Contents of the second model request message can refer to the first model request message in step 611.

Step 616: An MTLF sends a model response message to the model platform (such as ADRF), which includes the specific AI model requested.

For details of contents of the model response message, refer to the contents of the model storage request message.

Step 617: The model platform (such as ADRF) stores the relevant model information, which can refer to the description of step 602.

Step 618: The model platform (such as ADRF) sends a model feedback message to the model consuming network element, where the model feedback message includes model file (model file) information or model file storage information corresponding to the one or more determined models. Reference may be made to the description of step 605.

With the information interaction method between network elements, a unified or a small number of model platforms are deployed in the network, enabling each training function entity to publish and store the trained models to the model platform, and also to publish the description information corresponding to the models to the model platform. Model consuming network elements uniformly query and acquire a model matching the requirement from the model platform.

This method avoids different model consuming network elements from separately acquiring models from different training function entities, which avoids a large number of point-to-point network element discovery operations and eliminates the repeated process of requesting to send a model in a point-to-point approach, reducing network signaling and data overhead.

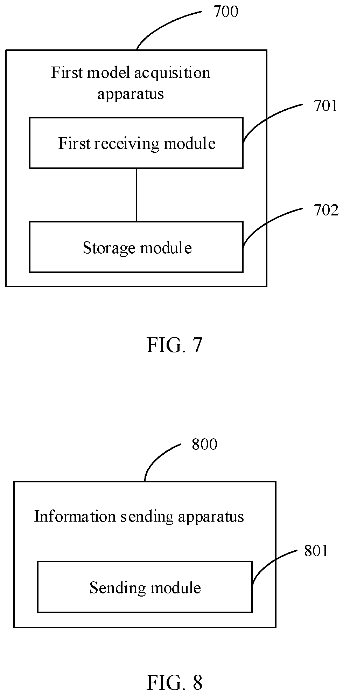

FIG. 7 shows a first model acquisition apparatus according to an embodiment of this application, in which the first model acquisition apparatus 700 includes:
a first receiving module 701, configured to receive a model storage request message sent by a second network element, where the model storage request message includes model information for at least one model, the model information including at least one of a model file and model file storage information; and
a storage module 702, configured to store the model information for the at least one model.

Optionally, the model information further includes model description information. The model description information includes at least one of the following:
framework information on which a model is based;
description method information on which a model is based;
optimization algorithm information on which a model is based;
information about precision achievable by a model;
model storage space information;
model computing power requirement information; and
model version information.

Optionally, the first model acquisition apparatus 700 further includes:
a second receiving module, configured to receive a first model request message sent by a third network element, where the first model request message includes model requirement information;
a first determining module, configured to determine a target model based on the model requirement information, the target model matching the model requirement information; and
a first sending module, configured to send model information for the target model to the third network element.

Optionally, the model requirement information includes at least one of the following:
framework information on which a model is based;
description method information on which a model is based;
optimization algorithm information on which a model is based;
information about precision achievable by a model;
model storage space information;
model computing power requirement information; and
model version requirement information.

Optionally, the framework information is used to indicate a training framework on which a model is based;
and/or
the description method information is used to indicate model format information or model language information;
   and/or
the optimization algorithm information is used to indicate a model convergence algorithm;
   and/or
the computing power requirement information is used to indicate computing power required by a model in performing an inference task.

Optionally, the first determining module is configured to determine a model matching the model requirement information as the target model in a case that the first network element includes the model matching the model requirement information.

Optionally, the first determining module includes:
a sending submodule, configured to send a second model request message to a fourth network element in a case that the first network element includes no models matching the model requirement information, the second model request information including the model requirement information;
a receiving submodule, configured to receive a model response message sent by the fourth network element, the model response message including model information for a model matching the model requirement information; and
a determining submodule, configured to determine a model matching the model requirement information as the target model.

Optionally, the first model acquisition apparatus 700 further includes:
a second sending module, configured to send a network element query request message to a fifth network element, where the network element query request message includes network element capability requirement information, the network element capability requirement information being determined by the first network element based on the first model requirement information;
a third receiving module, configured for the first network element to receive a network element query response message sent by the fifth network element, the network element query response message including network element information matching the network element capability requirement information; and
a second determining module, configured to determine the fourth network element based on the network element information, the fourth network element being capable of providing model information for a model matching the model requirement information.

Optionally, the first network element includes a data repository function network element.

Optionally, the second network element or the fourth network element includes a model training logical function MTLF network element.

Optionally, the third network element includes an analytics logical function AnLF network element.

Optionally, the fifth network element includes a network repository function NRF network element.

The first model acquisition apparatus 700 provided in this embodiment of this application is capable of implementing the processes implemented in the method embodiment shown in FIG. 2, with the same technical effects achieved. To avoid repetition, details are not repeated herein.

FIG. 8 shows an information sending apparatus according to an embodiment of this application. The information sending apparatus 800 includes:
a sending module 801, configured to send a model storage request message to a first network element, where the model storage request message includes model information for at least one model, the model information including at least one of a model file and model file storage information.

Optionally, the model information further includes model description information. The model description information includes at least one of the following:
framework information on which a model is based;
description method information on which a model is based;
optimization algorithm information on which a model is based;
information about precision achievable by a model;
model storage space information;
model computing power requirement information; and
model version information.

Optionally, the information sending apparatus 800 further includes an acquisition module configured to train the at least one model to obtain model information for the at least one model, or
receive model information for the at least one model.

Optionally, the information sending apparatus 800 further includes a receiving module configured to receive a second model request message sent by the first network element, where the second model request message includes model requirement information, and the at least one model is a model matching the model requirement information.

Optionally, the model requirement information includes at least one of the following:
framework information on which a model is based;
description method information on which a model is based;
optimization algorithm information on which a model is based;
information about precision achievable by a model;
model storage space information;
model computing power requirement information; and
model version requirement information.

Optionally, the framework information is used to indicate a training framework on which a model is based;
and/or
the description method information is used to indicate model format information or model language information;
   and/or
the optimization algorithm information is used to indicate a model convergence algorithm;
   and/or
the computing power requirement information is used to indicate computing power required by a model in performing an inference task.

Optionally, the first network element includes a data repository function network element.

Optionally, the second network element includes a model training logical function MTLF network element.

The information sending apparatus 800 provided in this embodiment of this application can implement the processes implemented by the method embodiment in FIG. 3, with the same technical effects achieved. To avoid repetition, details are not repeated herein.

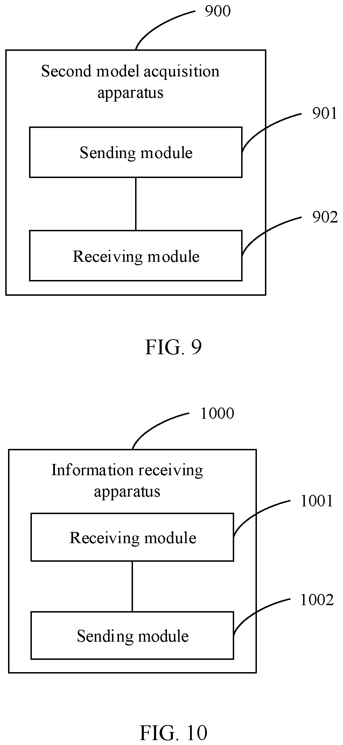

FIG. 9 shows a second model acquisition apparatus according to an embodiment of this application. The second model acquisition apparatus 900 includes:
a sending module 901, configured to send a first model request message to a first network element, the first model request message including model requirement information; and
a receiving module 902, configured to receive model information for a target model sent by the first network element, where the target model matches the model requirement information, and the model information includes at least one of a model file and model file storage information.

Optionally, the model information further includes model description information. The model description information includes at least one of the following:
framework information on which a model is based;
description method information on which a model is based;
optimization algorithm information on which a model is based;
information about precision achievable by a model;
model storage space information;
model computing power requirement information; and
model version information.

Optionally, the model requirement information includes at least one of the following:
framework information on which a model is based;
description method information on which a model is based;
optimization algorithm information on which a model is based;
information about precision achievable by a model;
model storage space information;
model computing power requirement information; and
model version requirement information.

Optionally, the framework information is used to indicate a training framework on which a model is based;
and/or
the description method information is used to indicate model format information or model language information;
   and/or
the optimization algorithm information is used to indicate a model convergence algorithm;
   and/or
the computing power requirement information is used to indicate computing power required by a model in performing an inference task.

Optionally, the first network element includes a data repository function network element.

Optionally, the third network element includes an analytics logical function AnLF network element.

The second model acquisition apparatus 900 provided in this embodiment of this application is capable of implementing the processes implemented in the method embodiment shown in FIG. 4, with the same technical effects achieved. To avoid repetition, details are not repeated herein.

FIG. 10 shows an information receiving apparatus according to an embodiment of this application. The information receiving apparatus 1000 includes:
a receiving module 1001, configured to receive a network element query request message sent by a first network element, where the network element query request message includes network element capability requirement information, the network element capability requirement information is determined by the first network element based on model requirement information, the network element capability requirement information is used to determine a fourth network element, and the fourth network element is capable of providing model information for a model matching the model requirement information; and
a sending module 1002, configured to send a network element query response message to the first network element, the network element query response message including network element information matching the network element capability requirement information.

Optionally, the model requirement information includes at least one of the following:
framework information on which a model is based;
description method information on which a model is based;
optimization algorithm information on which a model is based;
information about precision achievable by a model;
model storage space information;
model computing power requirement information; and
model version requirement information.

Optionally, the framework information is used to indicate a training framework on which a model is based;
and/or
the description method information is used to indicate model format information or model language information;
   and/or
the optimization algorithm information is used to indicate a model convergence algorithm;
   and/or
the computing power requirement information is used to indicate computing power required by a model in performing an inference task.

Optionally, the first network element includes a data repository function network element.

Optionally, the fifth network element includes a network repository function NRF network element.

The information receiving apparatus 1000 provided in this embodiment of this application can implement the processes implemented by the method embodiment in FIG. 5, with the same technical effects achieved. To avoid repetition, details are not repeated herein.

The apparatus in this embodiment of this application may be an electronic device such as an electronic device with an operating system, or a component in an electronic device such as an integrated circuit or chip. The electronic device may be a terminal or a device other than terminals. For example, the terminal may include but is not limited to the types of the terminal 11 listed above, and the other device may be a server, a network attached storage (Network Attached Storage, NAS), or the like. This is not specifically limited in this embodiment of this application.

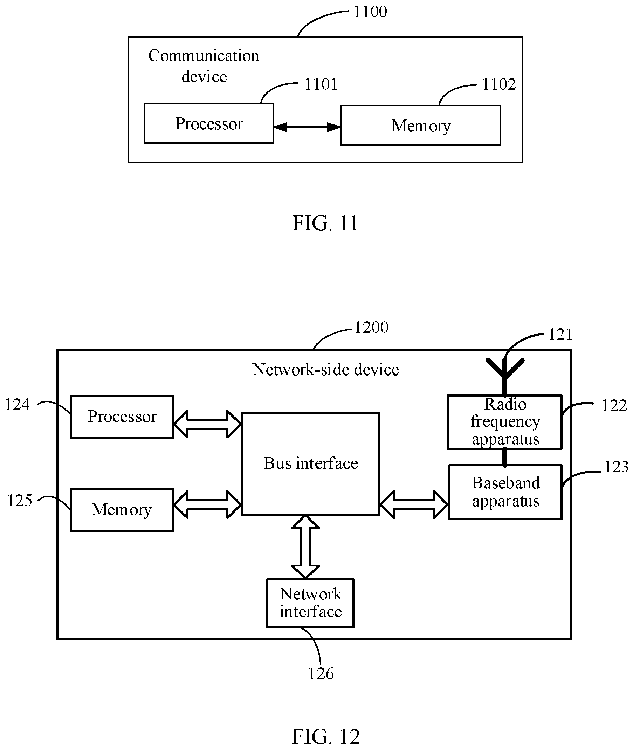

Optionally, as shown in FIG. 11, an embodiment of this application further provides a communication device 1100 including a processor 1101 and a memory 1102. The memory 1102 has stored thereon a program or instruction capable of running on the processor 1101. When the program or instruction is executed by the processor 1101, the steps of the foregoing method embodiment shown in FIG. 2, FIG. 3, FIG. 4, or FIG. 5 are implemented, with the same technical effects achieved. To avoid repetition, details are not repeated herein.

An embodiment of this application further provides a first network element including a processor and a communication interface. The communication interface is configured to receive a model storage request message sent by a second network element, where the model storage request message includes model information for at least one model, the model information including at least one of a model file and model file storage information. The processor is configured to store the model information for the at least one model. This first network element embodiment corresponds to the foregoing method embodiment shown in FIG. 2. All processes and implementations in the foregoing method embodiment can be applicable to this first network element embodiment, with the same technical effects achieved.

An embodiment of this application further provides a second network element including a processor and a communication interface. The communication interface is configured to send a model storage request message to a first network element, where the model storage request message includes model information for at least one model, the model information including at least one of a model file and model file storage information. This second network element embodiment corresponds to the foregoing method embodiment shown in FIG. 3. All processes and implementations in the foregoing method embodiment can be applicable to this second network element embodiment, with the same technical effects achieved.

An embodiment of this application further provides a third network element including a processor and a communication interface. The communication interface is configured to send a first model request message to a first network element, the first model request message including model requirement information; and receive model information for a target model sent by the first network element, where the target model matches the model requirement information, and the model information includes at least one of a model file and model file storage information. This third network element embodiment corresponds to the foregoing method embodiment shown in FIG. 4. All processes and implementations in the foregoing method embodiment can be applicable to this third network element embodiment, with the same technical effects achieved.

An embodiment of this application further provides a fifth network element including a processor and a communication interface. The communication interface is configured to receive a network element query request message sent by a first network element, where the network element query request message includes network element capability requirement information, the network element capability requirement information is determined by the first network element based on model requirement information, the network element capability requirement information is used to determine a fourth network element, and the fourth network element is capable of providing model information for a model matching the model requirement information; and send a network element query response message to the first network element, the network element query response message including network element information matching the network element capability requirement information. This fifth network element embodiment corresponds to the foregoing method embodiment shown in FIG. 5. All processes and implementations in the foregoing method embodiment are applicable to this fifth network element embodiment, with the same technical effects achieved.

Specifically, an embodiment of this application further provides a network-side device. As shown in FIG. 12, the network-side device 1200 includes an antenna 121, a radio frequency apparatus 122, a baseband apparatus 123, a processor 124, and a memory 125. The antenna 121 is connected to the radio frequency apparatus 122. In uplink, the radio frequency apparatus 122 receives information through the antenna 121, and sends the received information to the baseband apparatus 123 for processing. In downlink, the baseband apparatus 123 processes to-be-sent information, and sends the information to the radio frequency apparatus 122; and the radio frequency apparatus 122 processes the received information and then sends the information out through the antenna 121.

The method executed by the network-side device in the foregoing embodiment may be implemented on the baseband apparatus 123. The baseband apparatus 123 includes a baseband processor.

The baseband apparatus 123 may include, for example, at least one baseband processing unit, where a plurality of chips are disposed on the baseband processing unit. As shown in FIG. 12, one of the chips is, for example, a baseband processor, and connected to the memory 125 through a bus interface, to invoke the program in the memory 125 to perform the operations of the network device shown in the foregoing method embodiment.

The network-side device may further include a network interface 126, where the interface is, for example, a common public radio interface (Common Public Radio Interface, CPRI).

Specifically, the network-side device 1200 in this embodiment of the present invention further includes a program or instruction stored in the memory 125 and capable of running on the processor 124. When the processor 124 invokes the program or instruction in the memory 125, the method performed by each module shown in FIG. 7, FIG. 8, FIG. 9, or FIG. 10 is performed, with the same technical effect achieved. To avoid repetition, details are not repeated herein.

An embodiment of this application further provides a readable storage medium. The readable storage medium stores a program or instruction. When the program or instruction is executed by a processor, the processes of the method embodiment shown in FIG. 2, FIG. 3, FIG. 4, or FIG. 5 are implemented, with the same technical effects achieved. To avoid repetition, details are not repeated herein.

The processor is a processor in the terminal in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instruction to implement the processes of the method embodiment shown in FIG. 2, FIG. 3, FIG. 4, or FIG. 5, with the same technical effects achieved. To avoid repetition, details are not repeated herein.

It should be understood that the chip mentioned in an embodiment of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement the processes of the foregoing method embodiment shown in FIG. 2, FIG. 3, FIG. 4, or FIG. 5, with the same technical effects achieved. To avoid repetition, details are not repeated herein.

An embodiment of this application further provides a communication system including a first network element, a second network element, a third network element, a fourth network element, and a fifth network element. The first network element is configured to perform the steps of the foregoing method embodiment shown in FIG. 2, the second network element is configured to perform the steps of the foregoing method embodiment shown in FIG. 3, the third network element is configured to perform the steps of the foregoing method embodiment shown in FIG. 4, the fourth network element is configured to perform the steps of the foregoing method embodiment shown in FIG. 2; and the fifth network element is configured to perform the steps of the foregoing method embodiment shown in FIG. 5.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a... " does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Based on the above description of embodiments, persons skilled in the art can clearly understand that the method in the foregoing embodiments can be implemented through software on a necessary general hardware platform or certainly through hardware only, but in many cases, the former is the more preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A model acquisition method, comprising:
receiving, by a first network element, a model storage request message sent by a second network element, wherein the model storage request message comprises model information for at least one model, the model information comprising at least one of a model file and model file storage information; and
storing, by the first network element, the model information for the at least one model.

2. The method according to claim 1, wherein the model information further comprises model description information, the model description information comprising at least one of the following:
framework information on which a model is based;
description method information on which a model is based;
optimization algorithm information on which a model is based;
information about precision achievable by a model;
model storage space information;
model computing power requirement information; and
model version information.

3. The method according to claim 1, wherein the method further comprises:
receiving, by the first network element, a first model request message sent by a third network element, the first model request message comprising model requirement information;
determining, by the first network element, a target model based on the model requirement information, the target model matching the model requirement information; and
sending, by the first network element, model information for the target model to the third network element.

4. The method according to claim 3, wherein the model requirement information comprises at least one of the following:
framework information on which a model is based;
description method information on which a model is based;
optimization algorithm information on which a model is based;
information about precision achievable by a model;
model storage space information;
model computing power requirement information; and
model version requirement information.

5. The method according to claim 2 or 4, wherein the framework information is used to indicate a training framework on which a model is based;
and/or
the description method information is used to indicate model format information or model language information;
and/or
the optimization algorithm information is used to indicate a model convergence algorithm;
and/or
the computing power requirement information is used to indicate computing power required by a model in performing an inference task.

6. The method according to claim 3, wherein the determining, by the first network element, a target model based on the model requirement information comprises:
determining, by the first network element, a model matching the model requirement information as the target model in a case that the first network element comprises the model matching the model requirement information.

7. The method according to claim 3, wherein the determining, by the first network element, a target model based on the model requirement information comprises:
sending, by the first network element, a second model request message to a fourth network element in a case that the first network element comprises no models matching the model requirement information, the second model request information comprising the model requirement information;
receiving, by the first network element, a model response message sent by the fourth network element, the model response message comprising model information for a model matching the model requirement information; and
determining, by the first network element, a model matching the model requirement information as the target model.

8. The method according to claim 7, wherein the method further comprises:
sending, by the first network element, a network element query request message to a fifth network element, wherein the network element query request message comprises network element capability requirement information, the network element capability requirement information being determined by the first network element based on the first model requirement information;
receiving, by the first network element, a network element query response message sent by the fifth network element, the network element query response message comprising network element information matching the network element capability requirement information; and
determining, by the first network element, the fourth network element based on the network element information, the fourth network element being capable of providing model information for a model matching the model requirement information.

9. The method according to any one of claims 1 and 2 or 4 or 6 to 8, wherein the first network element comprises a data repository function network element.

10. The method according to claim 7 or 8, wherein the second network element or the fourth network element comprises a model training logical function MTLF network element.

11. The method according to claim 3, wherein the third network element comprises an analytics logical function AnLF network element.

12. The method according to claim 8, wherein the fifth network element comprises a network repository function NRF network element.

13. An information sending method, comprising:
sending, by a second network element, a model storage request message to a first network element, wherein the model storage request message comprises model information for at least one model, the model information comprising at least one of a model file and model file storage information.

14. The method according to claim 13, wherein the model information further comprises model description information, the model description information comprising at least one of the following:
framework information on which a model is based;
description method information on which a model is based;
optimization algorithm information on which a model is based;
information about precision achievable by a model;
model storage space information;
model computing power requirement information; and
model version information.

15. The method according to claim 13, wherein before the sending, by a second network element, a model storage request message to a first network element, the method further comprises:
training, by the second network element, the at least one model to obtain model information for the at least one model;
or,
receiving, by the second network element, model information for the at least one model.

16. The method according to claim 13, wherein before the sending, by a second network element, a model storage request message to a first network element, the method further comprises:
receiving, by the second network element, a second model request message sent by the first network element, wherein the second model request message comprises model requirement information, and the at least one model is a model matching the model requirement information.

17. The method according to claim 16, wherein the model requirement information comprises at least one of the following:
framework information on which a model is based;
description method information on which a model is based;
optimization algorithm information on which a model is based;
information about precision achievable by a model;
model storage space information;
model computing power requirement information; and
model version requirement information.

18. The method according to claim 17, wherein the framework information is used to indicate a training framework on which a model is based;
and/or
the description method information is used to indicate model format information or model language information;
and/or
the optimization algorithm information is used to indicate a model convergence algorithm;
and/or
the computing power requirement information is used to indicate computing power required by a model in performing an inference task.

19. The method according to any one of claims 13 to 17, wherein the first network element comprises a data repository function network element.

20. The method according to any one of claims 13 to 17, wherein the second network element comprises a model training logical function MTLF network element.

21. A model acquisition method, comprising:
sending, by a third network element, a first model request message to a first network element, the first model request message comprising model requirement information; and
receiving, by the third network element, model information for a target model sent by the first network element, wherein the target model matches the model requirement information, and the model information comprises at least one of a model file and model file storage information.

22. The method according to claim 21, wherein the model information further comprises model description information, the model description information comprising at least one of the following:
framework information on which a model is based;
description method information on which a model is based;
optimization algorithm information on which a model is based;
information about precision achievable by a model;
model storage space information;
model computing power requirement information; and
model version information.

23. The method according to claim 21, wherein the model requirement information comprises at least one of the following:
framework information on which a model is based;
description method information on which a model is based;
optimization algorithm information on which a model is based;
information about precision achievable by a model;
model storage space information;
model computing power requirement information; and
model version requirement information.

24. The method according to claim 22 or 23, wherein the framework information is used to indicate a training framework on which a model is based;
and/or
the description method information is used to indicate model format information or model language information;
and/or
the optimization algorithm information is used to indicate a model convergence algorithm;
and/or
the computing power requirement information is used to indicate computing power required by a model in performing an inference task.

25. The method according to any one of claims 21 to 23, wherein the first network element comprises a data repository function network element.

26. The method according to any one of claims 21 to 23, wherein the third network element comprises an analytics logical function AnLF network element.

27. An information receiving method, comprising:
receiving, by a fifth network element, a network element query request message sent by a first network element, wherein the network element query request message comprises network element capability requirement information, the network element capability requirement information is determined by the first network element based on model requirement information, the network element capability requirement information is used to determine a fourth network element, and the fourth network element is capable of providing model information for a model matching the model requirement information; and
sending, by the fifth network element, a network element query response message to the first network element, the network element query response message comprising network element information matching the network element capability requirement information.

28. The method according to claim 27, wherein the model requirement information comprises at least one of the following:
framework information on which a model is based;
description method information on which a model is based;
optimization algorithm information on which a model is based;
information about precision achievable by a model;
model storage space information;
model computing power requirement information; and
model version requirement information.

29. The method according to claim 28, wherein the framework information is used to indicate a training framework on which a model is based;
and/or
the description method information is used to indicate model format information or model language information;
and/or
the optimization algorithm information is used to indicate a model convergence algorithm;
and/or
the computing power requirement information is used to indicate computing power required by a model in performing an inference task.

30. The method according to claim 27 or 29, wherein the first network element comprises a data repository function network element.

31. The method according to claim 27 or 29, wherein the fifth network element comprises a network repository function NRF network element.

32. A model acquisition apparatus, comprising:
a receiving module, configured to receive a model storage request message sent by a second network element, wherein the model storage request message comprises model information for at least one model, the model information comprising at least one of a model file and model file storage information; and
a storage module, configured to store the model information for the at least one model.

33. The apparatus according to claim 32, wherein the model information further comprises model description information, the model description information comprising at least one of the following:
framework information on which a model is based;
description method information on which a model is based;
optimization algorithm information on which a model is based;
information about precision achievable by a model;
model storage space information;
model computing power requirement information; and
model version information.

34. An information sending apparatus, comprising:
a sending module, configured to send a model storage request message to a first network element, wherein the model storage request message comprises model information for at least one model, the model information comprising at least one of a model file and model file storage information.

35. The apparatus according to claim 34, wherein the model information further comprises model description information, the model description information comprising at least one of the following:
framework information on which a model is based;
description method information on which a model is based;
optimization algorithm information on which a model is based;
information about precision achievable by a model;
model storage space information;
model computing power requirement information; and
model version information.

36. A model acquisition apparatus, comprising:
a sending module, configured to send a first model request message to a first network element, the first model request message comprising model requirement information; and
a receiving module, configured to receive model information for a target model sent by the first network element, wherein the target model matches the model requirement information, and the model information comprises at least one of a model file and model file storage information.

37. The apparatus according to claim 36, wherein the model information further comprises model description information, the model description information comprising at least one of the following:
framework information on which a model is based;
description method information on which a model is based;
optimization algorithm information on which a model is based;
information about precision achievable by a model;
model storage space information;
model computing power requirement information; and
model version information.

38. An information receiving apparatus, comprising:
a receiving module, configured to receive a network element query request message sent by a first network element, wherein the network element query request message comprises network element capability requirement information, the network element capability requirement information is determined by the first network element based on model requirement information, the network element capability requirement information is used to determine a fourth network element, and the fourth network element is capable of providing model information for a model matching the model requirement information; and
a sending module, configured to send a network element query response message to the first network element, the network element query response message comprising network element information matching the network element capability requirement information.

39. The apparatus according to claim 38, wherein the model requirement information comprises at least one of the following:
framework information on which a model is based;
description method information on which a model is based;
optimization algorithm information on which a model is based;
information about precision achievable by a model;
model storage space information;
model computing power requirement information; and
model version requirement information.

40. A network element, comprising a processor and a memory, wherein the memory stores a program or instruction capable of running on the processor, and when the program or instruction is executed by the processor, the steps of the method according to any one of claims 1 to 31 are implemented.

41. A readable storage medium, wherein the readable storage medium has a program or instruction stored thereon, and when the program or instruction is executed by a processor, the steps of the method according to any one of claims 1 to 31 are implemented.
